# EUROPEAN PATENT APPLICATION

(11) **EP 4 718 367 A1**
(43) Date of publication of application: **01.04.2026**
(21) Application number: 23938400.1
(22) Date of filing: 22.05.2023
(51) Int. Cl.: G06Q 50/16

(54) **COMMUNICATION TERMINAL**

(71) Applicant: Genetec Corporation, Tokyo, 163-1325 (JP)
(72) Inventor: GOTOH, Yoshihito, Shinjuku-ku, Tokyo 163-1325 (JP); UENO, Kenji, Shinjuku-ku, Tokyo 163-1325 (JP)
(74) Representative: Global IP Europe Patentanwaltskanzlei
(86) International application number: PCT/JP2023/018949
(87) International publication number: WO 2024/241427

(57) **Abstract**

There is provided position information or the like of others in consideration of height.

A communication terminal is a communication terminal including a display unit. The display unit displays at least one of a first selection screen including one or more pieces of position information of communication terminals different from at least the communication terminal and a second selection screen including one or more pieces of position information of real estate. When one piece of position information of the one or more of the different communication terminals is selected on the first selection screen, the display unit displays a first result screen including a topographical cross section between a first region in which the communication terminal is located and a second region in which the different communication terminal selected on the first selection screen are located. When one of the one or more pieces of position information of the real estate is selected on the second selection screen, the display unit displays a second result screen including a topographical cross section between the first region and a third region in which the real estate selected on the second selection screen is located.

## Description

### Technical Field

The present invention relates to a communication terminal that displays position information in consideration of height.

### Background Art

Patent Literature 1 and the like propose a system that displays position information of others and the like.

### Citation List

### Patent Literature

Patent Literature 1: JP 2004-227245 A

### Summary of Invention

### Technical Problem

However, notifying other users of position information including the height is not sufficiently considered.

Therefore, an object of the present invention is to provide position information or the like of others in consideration of height.

### Solution to Problem

A communication terminal according to the present invention includes a display unit.

The display unit displays at least one of a first selection screen including one or more pieces of position information of communication terminals different from at least the communication terminal and a second selection screen including one or more pieces of position information of real estate.

When one piece of position information of the one or more of the different communication terminals is selected on the first selection screen, the display unit displays a first result screen including a topographical cross section between a first region in which the communication terminal is located and a second region in which the different communication terminal selected on the first selection screen are located.

When one of the one or more pieces of position information of the real estate is selected on the second selection screen, the display unit displays a second result screen including a topographical cross section between the first region and a third region in which the real estate selected on the second selection screen is located.

It is possible to visually recognize a positional relationship regarding the height between the user of the communication terminal and the user of the selected different communication terminal or a positional relationship regarding the height between the user of the communication terminal and the selected real estate.

It is easy to grasp the position information of the others (different communication terminal or real estate) in consideration of the height difference, for example, during a disaster when evacuation is required in consideration of tsunami, at the time when the other person is in the vicinity but is in a place with a different height and cannot find the whereabouts of the difference, or the like.

Preferably, the position information of the different communication terminals on the first selection screen includes height information of the different communication terminals and information regarding a movement direction of the different communication terminals.

It is easy to grasp the behavior of the user of the different communication terminal.

More preferably, the height information is obtained by converting first height information indicated using a length measurement unit into second height information indicating a degree of height without using the length measurement unit.

The height can be sensorially easily grasped as compared with a mode in which the height information is displayed using a length measurement unit such as meter display.

Preferably, the first result screen includes information regarding a height difference between the first region and the second region, height information of the first region, and height information of the second region.

The second result screen includes information regarding a height difference between the first region and the third region, height information of the first region, and height information of the third region.

The information regarding the height difference between the first region and the second region in the first result screen is represented by using a length measurement unit.

The information regarding the height difference between the first region and the third region in the second result screen is represented by using the length measurement unit.

The height information of the first region and the height information of the second region in the first result screen are indicated as a degree of height without using the length measurement unit.

The height information of the first region and the height information of the third region in the second result screen are indicated as a degree of height without using the length measurement unit.

The height difference can be grasped by objective height information, and the degree of height of each region can be grasped by sensuous height information.

Preferably, the display unit displays the first result screen when one piece of the position information of the one or more of the different communication terminals is selected on the first selection screen and a distance between the first region and the second region is less than a first distance threshold.

The display unit displays a third result screen having a map including the first region and the second region when one piece of the position information of the one or more of the different communication terminals is selected on the first selection screen and the distance between the first region and the second region is equal to or more than the first distance threshold.

The display unit displays the second result screen, when one of the one or more pieces of position information of the real estate is selected on the second selection screen and a distance between the first region and the third region is less than a second distance threshold.

The display unit displays a fourth result screen including the first region and the third region, when one of the one or more pieces of position information of the real estate is selected on the second selection screen and the distance between the first region and the third region is equal to or more than the second distance threshold.

Topographical cross-sectional display and planar map display can be switched according to the necessity of grasping the height difference.

More preferably, the first distance threshold is larger than the second distance threshold.

Preferably, the third result screen includes at least one of a movement locus of the communication terminal or a movement locus of the different communication terminal selected on the first selection screen.

It is easy to grasp the behavior of at least one of the user of said communication terminal or the users of said different communication terminals.

Preferably, in a case where a predetermined operation is performed on the first selection screen, the display unit displays a fifth result screen including a map including the first region and a region where each of the one or more of the different communication terminals is located.

The positions of the user of said communication terminal and the users of said different communication terminals can be grasped on one screen.

A communication terminal according to the present invention includes a display unit.

The display unit displays a first selection screen including one or more pieces of position information of communication terminals different from at least the communication terminal.

When the communication terminal or one piece of position information of the one or more of the different communication terminals is selected on the first selection screen, the display unit displays a sixth result screen including a movement locus in a vertical direction of one of a first region in which the communication terminal is located and a second region in which the different communication terminal selected on the first selection screen is located.

It is easy to grasp the behavior in the vertical direction of at least one of the user of said communication terminal or the users of said different communication terminals.

A communication terminal according to the present invention includes a display unit.

The display unit displays a first selection screen including one or more pieces of position information of communication terminals different from at least the communication terminal.

When the communication terminal or one piece of position information of the one or more of the different communication terminals is selected on the first selection screen, the display unit displays one of a sixth result screen including a movement locus in a vertical direction of one of a first region in which the communication terminal is located and a second region in which the different communication terminal selected on the first selection screen is located and a seventh result screen including a movement locus in a horizontal direction of one of the first region in which the communication terminal is located and the second regions in which the different communication terminal selected on the first selection screen is located, on the basis of a movement direction of the selected communication terminal among the communication terminals.

It is easy to grasp the behavior in the vertical direction or the horizontal direction of at least one of the user of said communication terminal or the users of said different communication terminals according to the movement direction.

### Advantageous Effects of Invention

As described above, according to the present invention, it is possible to provide position information or the like of others in consideration of height.

### Brief Description of Drawings

Fig. 1 is a configuration diagram of an information transmission system according to the present embodiment.
Fig. 2 is a diagram illustrating a content example of a position information database.
Fig. 3 is a diagram illustrating a content example of a height information conversion table.
Fig. 4 is a diagram illustrating a content example of a group information database.
Fig. 5 is a diagram illustrating a content example of an evacuation shelter database.
Fig. 6 is a display example of a first screen of a first communication terminal in a state where an upper region of a user position information display region is displayed.
Fig. 7 is a display example of the first screen of the first communication terminal in a state where a lower region of the user position information display region is displayed.
Fig. 8 is a display example of a second screen of a first communication terminal in a state where a group member is not selected.
Fig. 9 is a display example of the second screen of the first communication terminal in a state where a group member is selected.
Fig. 10 is a display example of a third screen of the first communication terminal.
Fig. 11 is a display example of a fourth screen of the first communication terminal.
Fig. 12 is a display example of a fifth screen of the first communication terminal.
Fig. 13 is a display example of a sixth screen of the first communication terminal.
Fig. 14 is a display example of a seventh screen of the first communication terminal.
Fig. 15 is a display example of an eighth screen of the first communication terminal.
Fig. 16 is a display example of a ninth screen of the first communication terminal.
Fig. 17 is a diagram illustrating a content example of a height information conversion table different from the content example of Fig. 4.

### Description of Embodiments

Hereinafter, the present embodiment will be described with reference to the drawings. However, the embodiment is not limited to the following embodiment. In principle, contents described in one embodiment are similarly applied to other embodiments. Each embodiment and each modification can be appropriately combined.

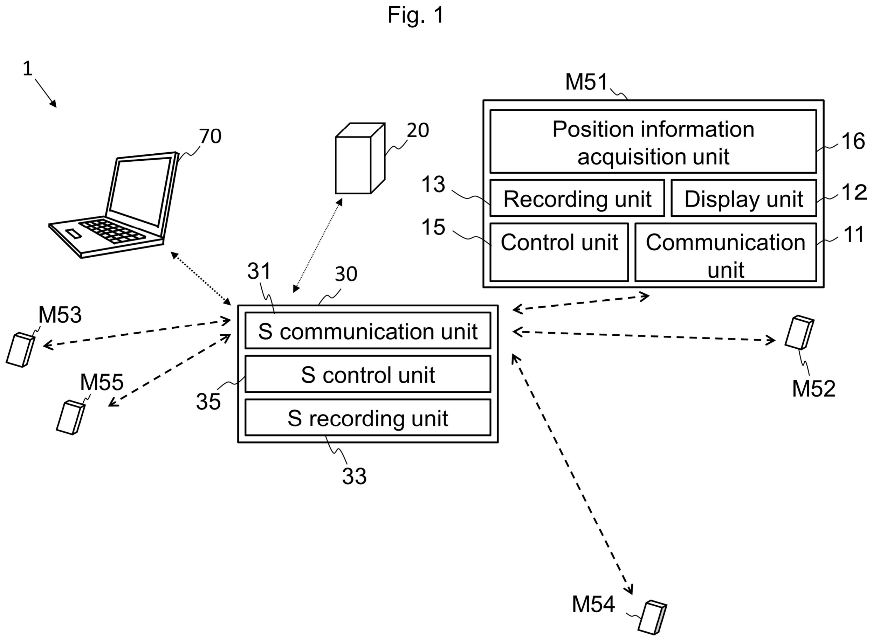

An information transmission system 1 according to the present embodiment includes an information source transmission unit 20, an information server 30 (a server communication unit 31, a server recording unit 33, and a server control unit 35), and communication terminals (a 51st communication terminal M51 to a 55th communication terminal M55) (see Fig. 1).

In the present embodiment, a mode in which mutual position information and safety information are notified using five communication terminals will be described, but the number of communication terminals is not limited to five.

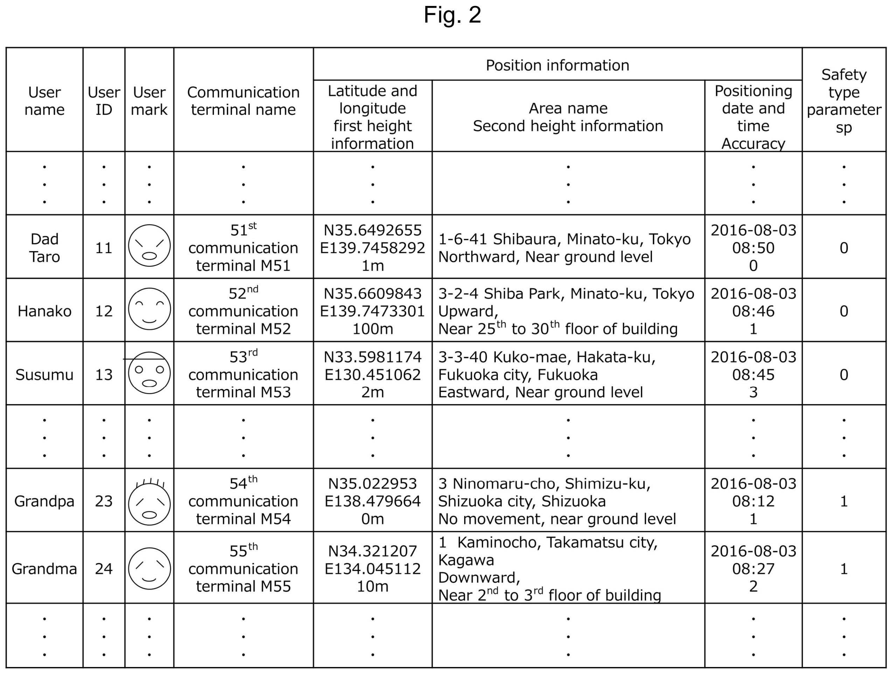

Note that the relationship between latitude and longitude information and first height information illustrated in Fig. 2 and the like and an area name or an evacuation shelter name may not match an actual one.

### (Configuration of Communication Terminal)

Each of the communication terminals (51st communication terminal M51 to 55th communication terminal M55) includes a communication unit 11, a display unit 12, a recording unit 13, a control unit 15, and a position information acquisition unit 16. Note that the communication terminal is preferably a portable terminal such as a mobile phone, but may be a device fixed at a predetermined position.

### (Communication Unit 11)

The communication unit 11 communicates with the server communication unit 31 and communicates with a base station forming a wireless link with said communication terminal.

### (Display Unit 12, Recording Unit 13, and Control Unit 15)

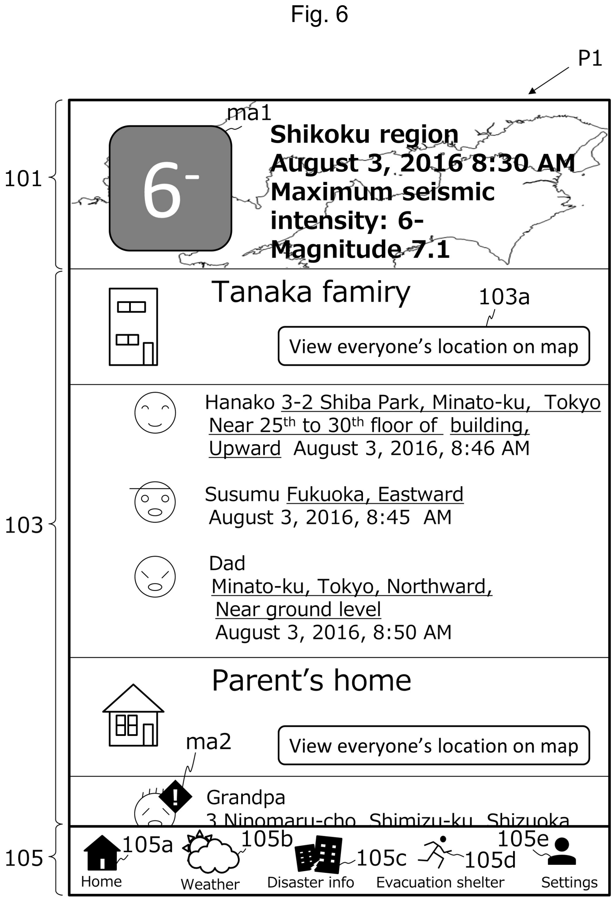

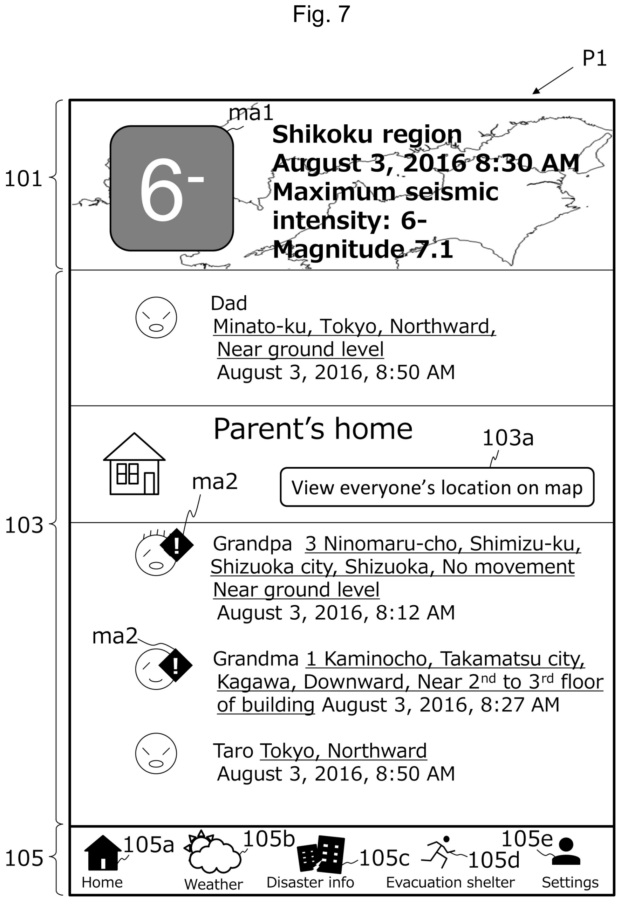

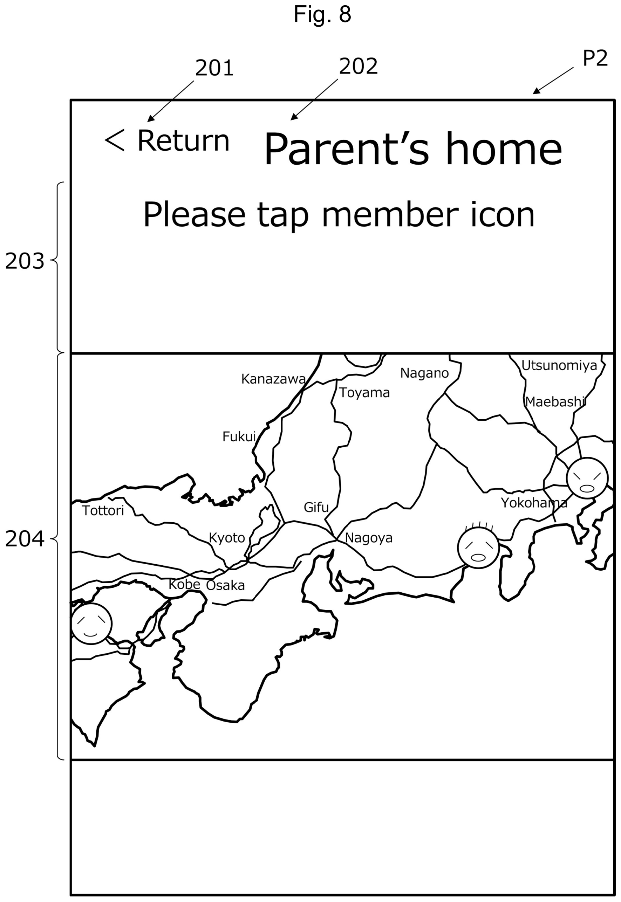

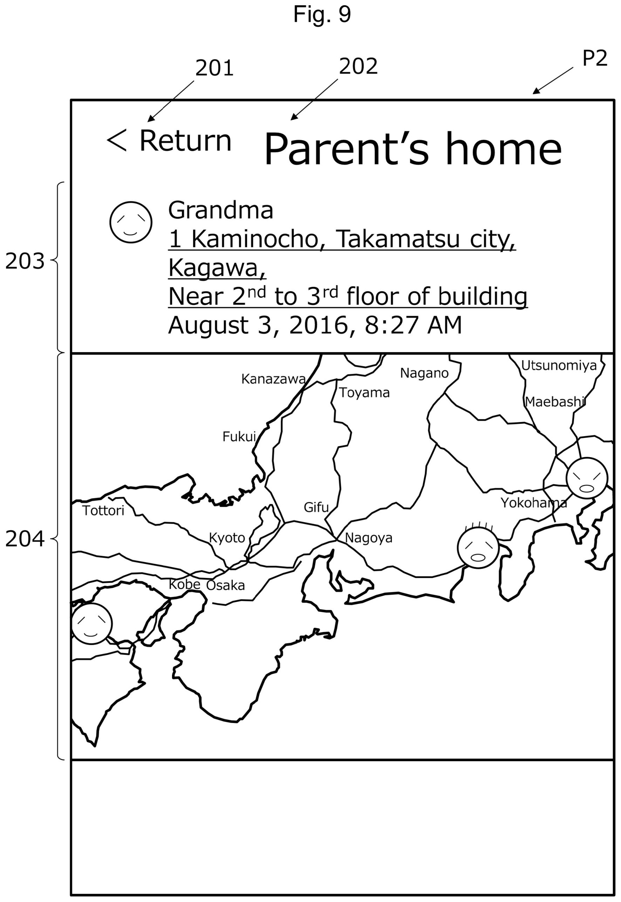

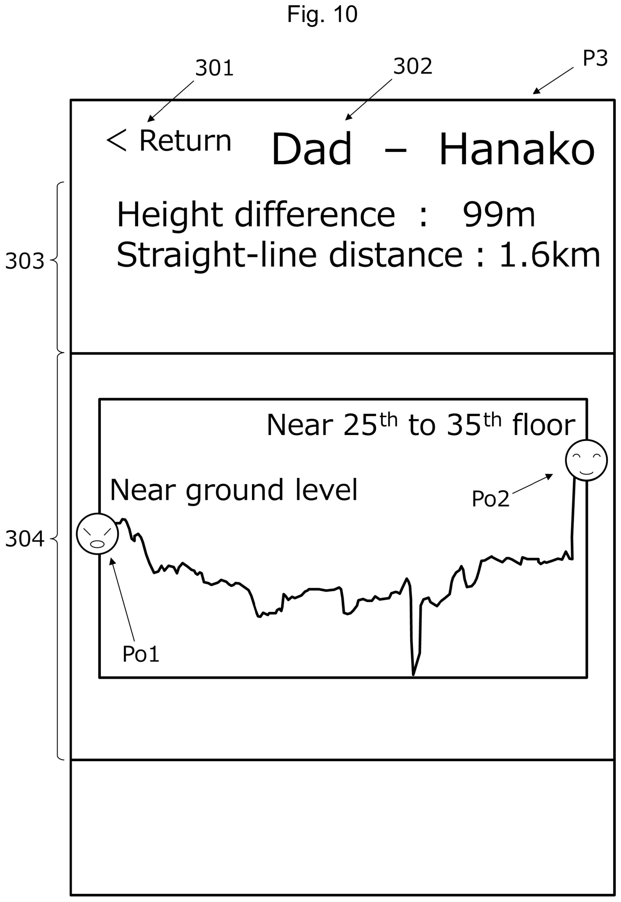

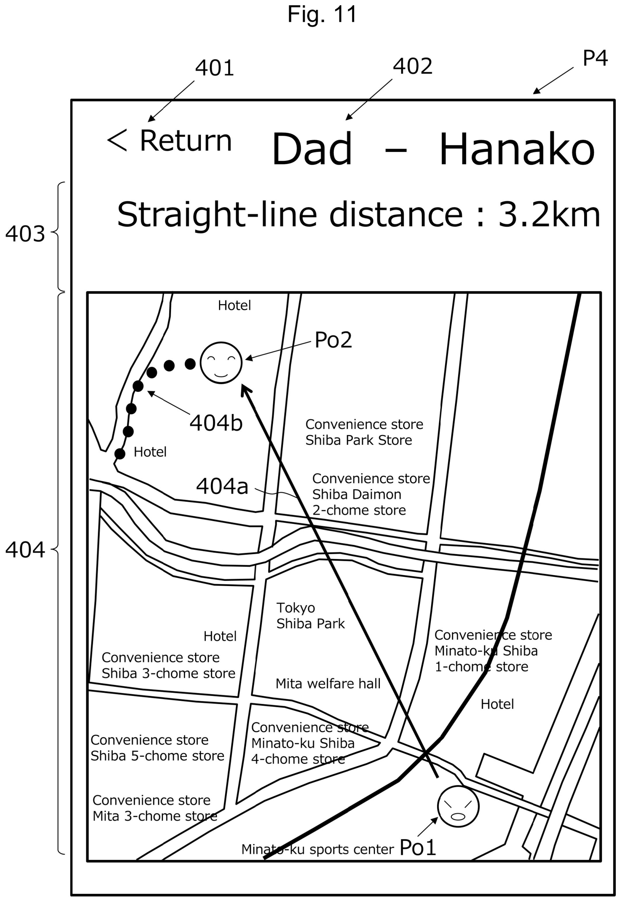

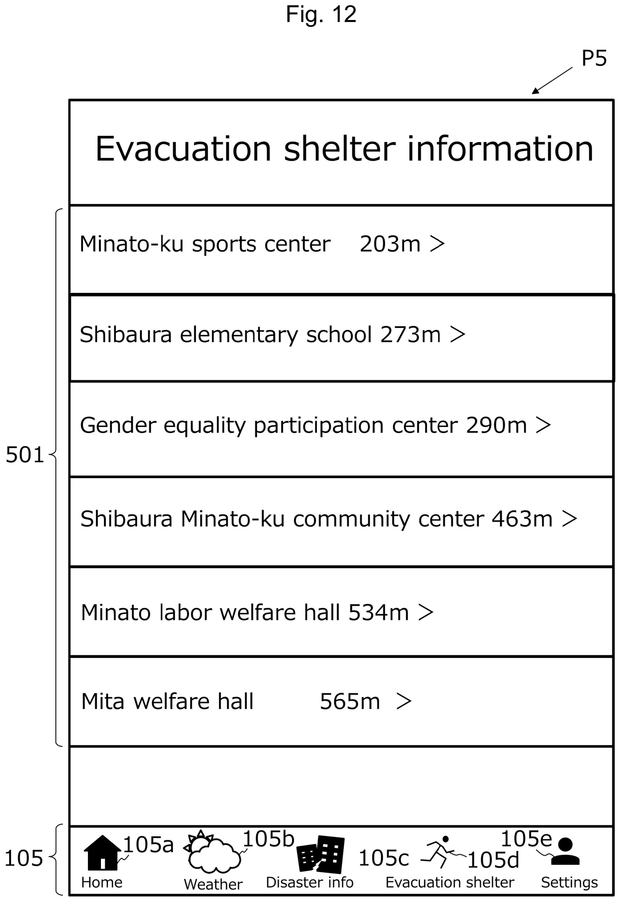

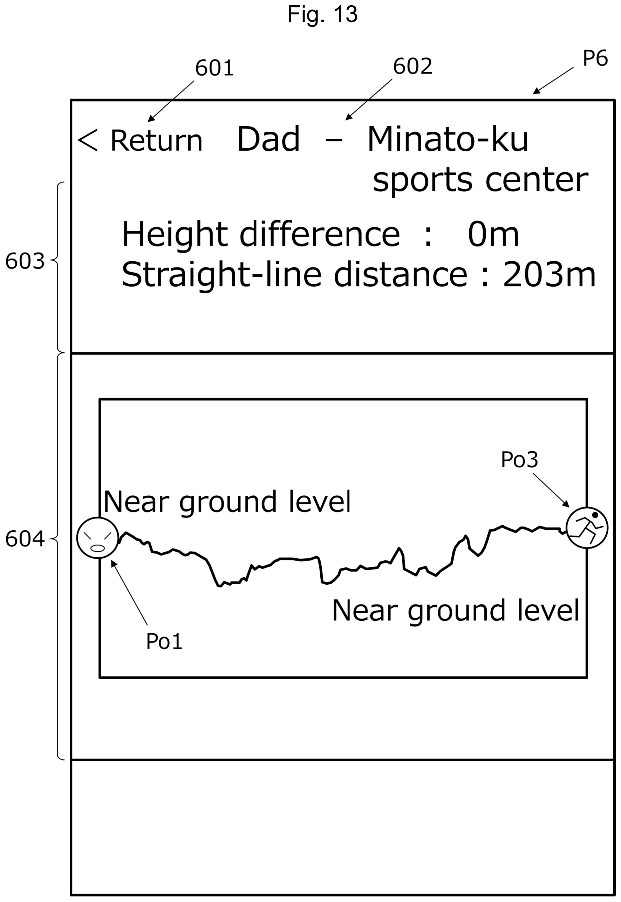

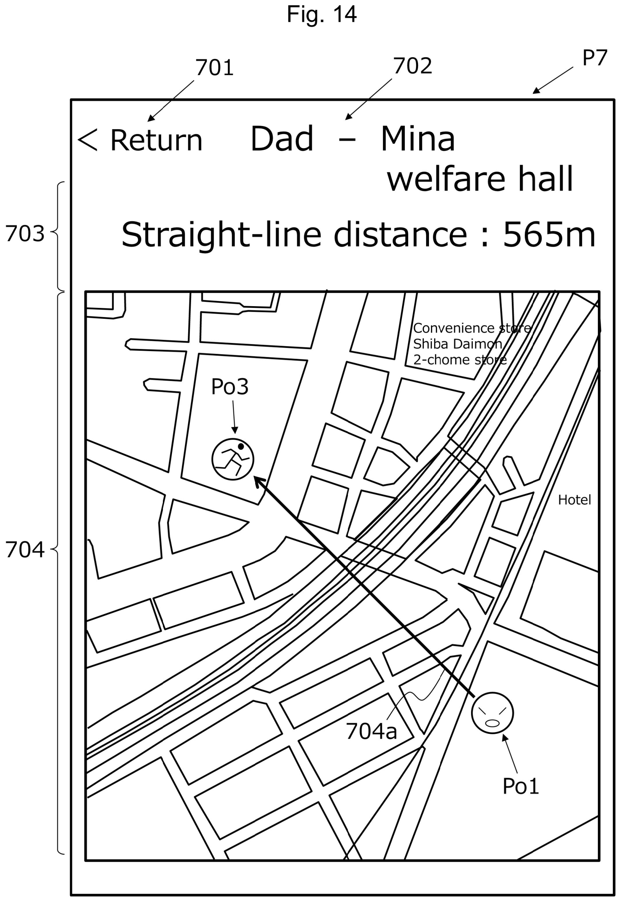

The display unit 12 displays a first screen P1 (see Figs. 6 and 7), a second screen P2 (see Figs. 8 and 9), a third screen P3 (see Fig. 10), a fourth screen P4 (see Fig. 11), a fifth screen P5 (see Fig. 12), a sixth screen P6 (see Fig. 13), and a seventh screen P7 (see Fig. 14).

In the recording unit 13, a position information program (information transmission program) in the present embodiment is installed.

The control unit 15 executes a position information program and controls each unit (communication unit 11, display unit 12, recording unit 13, and position information acquisition unit 16) of the communication terminal.

### (Position Information Acquisition Unit 16)

The position information acquisition unit 16 includes a positioning device such as a GPS and an acceleration sensor, and detects position information and acceleration of the communication terminal.

A mode may be employed in which the acquisition of the position information by the position information acquisition unit 16 is performed every certain period (for example, first time T1 to be described later).

The position information obtained by the position information acquisition unit 16 is transmitted to the information server 30 via the communication unit 11.

### (Position Information Program)

In the present embodiment, a user with a user ID: 11 (user name: dad, Taro) logs in a position information program (information transmission program) installed in the 51st communication terminal M51 with the user ID: 11, a user with a user ID: 12 (user name: Hanako) logs in a position information program installed in the 52nd communication terminal M52 with the user ID: 12, a user with a user ID: 13 (user name: Susumu) logs in a position information program installed in the 53rd communication terminal M53 with the user ID: 13, a user with a user ID: 23 (user name: grandpa) logs in a position information program installed in the 54th communication terminal M54 with the user ID: 23, and a user with a user ID: 24 (user name: grandma) logs in a position information program installed in the 55th communication terminal M55 with the user ID: 24.

Further, the screen display examples of Figs. 6 to 14 are displayed after the user with the user ID: 11 (user name: dad, Taro) logs in the position information program installed in the 51st communication terminal M51 with the user ID: 11.

In addition, a "communication terminal" described in the claims will be described as corresponding to the 51st communication terminal M51, but is not limited to the 51st communication terminal M51.

Further, the description will be given assuming that "different communication terminals" described in the claims correspond to the 52nd communication terminal M52 to the 55th communication terminal M55, but is not limited to the 52nd communication terminal M52 to the 55th communication terminal M55.

Information transmission and reception between the information server 30 and the communication terminal is performed via a position information program.

Note that, in the present embodiment, a mode in which the position information program installed in each communication terminal is used will be described, but a mode may be employed in which each communication terminal accesses a server of an application service provider (ASP) via a network and uses a position information program stored in said server of the ASP.

### (Information Source Transmission Unit 20)

The information source transmission unit 20 outputs disaster information to the server communication unit 31 of the information server 30.

The disaster information includes at least information regarding a disaster site, and in the present embodiment, the disaster information includes information regarding a disaster type, a site, and a date and time.

In the present embodiment, the disaster information will be described as disaster information related to an earthquake, but may be other disaster information such as a flood. In addition, the information may be not only information that has occurred in the past, such as an earthquake occurrence report, but also information that is predicted to occur in the future, such as lightning caution or earthquake prediction.

The information source transmission unit 20 is installed in a place where disaster information can be transmitted, such as the Meteorological Agency, in a state where network connection with the information server 30 is possible.

However, a mode may be employed in which the information source transmission unit 20 is not installed, and a user who has received relevant information of the disaster information inputs the disaster information to the information server 30 via the input/output terminal 70, and the information server 30 transmits the disaster information to the communication terminal on the basis of the disaster information.

In the present embodiment, an example is illustrated in which the information server 30 receives disaster information having "type of disaster: earthquake (magnitude 7.1 with maximum predicted seismic intensity of 6- in Shikoku region), place: Shikoku region, date and time: August 3, 2016, 8:30" from the information source transmission unit 20, and the 51st communication terminal M51 to the 55th communication terminal M55 transmit their own position information and the like to the information server 30 under the following conditions.

The 51st communication terminal M51 has transmitted the position information and safety answer information acquired at 8:50 on August 3, 2016, to the information server 30.

The 52nd communication terminal M52 has transmitted the position information and the safety answer information acquired at 8:46 on August 3, 2016, to the information server 30.

The 53rd communication terminal M53 has transmitted the position information and the safety answer information acquired at 8:45 on August 3, 2016, to the information server 30.

The 54th communication terminal M54 has transmitted the position information acquired at 8:12 on August 3, 2016, to the information server 30, but has not transmitted the safety answer information to the information server 30.

The 55th communication terminal M55 has transmitted the position information acquired at 8:27 on August 3, 2016, to the information server 30, but has not transmitted the safety answer information to the information server 30.

### (Information Server 30)

Next, each unit (the server communication unit 31, the server recording unit 33, and the server control unit 35) of the information server 30 will be described.

### (Server Communication Unit 31 of Information Server 30)

The server communication unit 31 of the information server 30 communicates with each of the communication terminals (the 51st communication terminal M51 to the 55th communication terminal M55) registered in a position information database D1, and acquires the position information of each communication terminal and the position information of the user of each communication terminal every first time T1 (for example, 30 minutes) before transmitting the disaster information to these communication terminals.

For example, a mode is conceivable in which each communication terminal transmits the position information to the server communication unit 31 of the information server 30 at every first time T1 by using the position information program installed in each communication terminal.

In addition, a mode in which the server communication unit 31 of the information server 30 communicates with any one of a base station that forms a wireless link with a communication terminal in a communication carrier, a mobile switching center (MSC) that performs routing (selection of a communication route), call setting/disconnection, billing, and the like of the communication terminal, a visitor location register (VLR) that is a position registration database for each area covered by the mobile switching center, a gateway mobile switching center (GMSC), and a home location register (HLR) that is a database that manages user information such as a mobile phone number, identification information (identification number of the terminal, such as IMEI, or identification number of a SIM card, such as ICCID) of said communication terminal, and position information to acquire the position information of each communication terminal is considered, instead of a mode in which the position information is acquired from each communication terminal.

When the position and height of the communication terminal itself can be specified by GPS positioning or the like and transmitted to the information server 30, the ICCID corresponding to the identification number of the SIM card included in said communication terminal, latitude and longitude information of said communication terminal, the first height information of said communication terminal, the acquisition date and time of said latitude and longitude information and said first height information, and the positioning accuracy information: 1 (with high accuracy) are set as the position information of said communication terminal.

If not, the ICCID corresponding to the identification number of the SIM card included in said communication terminal, the latitude and longitude information of the base station that has become communicable with said communication terminal, the first height information of said base station, the date and time when said communication terminal and said base station have become communicable (the acquisition date and time of said latitude and longitude information and said height information), and the positioning accuracy information: 2 (with medium accuracy), or the ICCID corresponding to the identification number of the SIM card included in said communication terminal, the latitude and longitude information of a base station area including the base station that has become communicable with said communication terminal, the first height information of said base station area, the date and time when said communication terminal and said base station have become communicable (the acquisition date and time of said latitude and longitude information and said height information), and the positioning accuracy information: 3 (with low accuracy) are set as the position information of said communication terminal.

In addition to the GPS positioning, when a more detailed position and height can be specified on the basis of the result of communication with an external device and transmitted to the information server 30, the ICCID corresponding to the identification number of the SIM card included in said communication terminal, the latitude and longitude information of said communication terminal, the first height information of said communication terminal, the acquisition date and time of said latitude and longitude information and said first height information, and the positioning accuracy information: 0 (with very high accuracy) are set as the position information of said communication terminal.

The external device referred to herein may be a device that transmits a radio wave to a communication terminal located at a short distance such as a beacon, a device that receives surrounding environment information (air pressure, air temperature, or the like) detected by the communication terminal, calculates first height information from said environment information, and transmits the first height information to said communication terminal, or the like.

The first height information of the base station indicates an average elevation above sea level (a height from an average sea surface of a neighboring harbor or the like) or an altitude (a height from an average sea surface) of the call area of the base station, the first height information of the base station area indicates an average elevation above sea level (a height from an average sea surface of a neighboring harbor or the like) or an altitude (a height from an average sea surface) of the call area of the base station area, and the first height information of each base station or base station area is determined in advance.

A mode may be employed in which, regarding the height information of the base station or the base station area, instead of the first height information, identification information such as the name of the base station or the base station area is transmitted to the information server 30, a table (not illustrated) for converting the identification information of the base station or the base station area into the first height information (or the second height information) is recorded in the communication terminal or the information server 30, and the identification information of the base station or the base station area is converted into the first height information (or the second height information).

Therefore, if at least the identification information of the base station communicating with the communication terminal or the base station area including said base station can be received as the position information, the information server 30 can acquire the position information (latitude and longitude information and height information) for each communication terminal.

Further, the position information includes information regarding a movement direction of the communication terminal.

The movement direction is calculated on the basis of the current position information of the communication terminal and the past position information of said communication terminal.

When the position information of each communication terminal is acquired, the detail level of the position information is not limited, and the position information at the most detailed level that can be acquired is acquired and recorded in the position information database D1.

However, when the position information of the communication terminal (first communication terminal) or another communication terminal (second communication terminal) is disclosed to said communication terminal, the detail level of the position information is adjusted on the basis of the "detail level of position information to be disclosed (first detail level parameter dp1 and second detail level parameter dp2)" set by the user of the communication terminal.

Further, the server communication unit 31 of the information server 30 receives the disaster information from the information source transmission unit 20, transmits said disaster information and the like to the communication terminals (the 51st communication terminal M51 to the 55th communication terminal M55) on the basis of the position information database D1 and a group information database D3 after receiving said disaster information (alternatively, after the input of said disaster information by the input/output terminal 70), and receives the safety answer information from said communication terminal.

### (Server Recording Unit 33 of Information Server 30)

The server recording unit 33 of the information server 30 records the position information database D1, a height information conversion table D2, the group information database D3, an evacuation shelter database D4, and a map information database D5.

In the server recording unit 33, a program for communicating with a communication terminal and transmitting and receiving disaster information or the like is installed in correspondence with a position information program (information transmission program) installed in said communication terminal.

### (Position Information Database D1)

The position information database D1 illustrates a relationship among information regarding the user of the communication terminal, the communication terminal (communication terminal name), information regarding the position of said communication terminal, and information regarding safety transmitted from said communication terminal (see Fig. 2).

The information regarding the user of the communication terminal in the position information database D1 is information (information set by the user setting operation) input by the user through each communication terminal, and includes a user name, a user ID (identification number for logging in the position information program), and a user mark (which may be a photograph) corresponding to each communication terminal.

A mode may be employed in which, for the user name, different names are used for each group, such as user names: dad and Taro corresponding to the user ID: 11.

The information regarding the position of the communication terminal includes latitude and longitude information and first height information corresponding to each communication terminal, an area name corresponding to said latitude and longitude information, second height information corresponding to said first height information, positioning date and time, and positioning accuracy.

The first height information is height information represented using a length measurement unit such as an elevation of 10 m.

The second height information is height information indicating a degree of height without using a measurement unit of length, and specifically, it is height information which is replaced with information that is easier to perceive sensually than said measurement unit, such as near the ground level and the number of floors (the number of respective layers in a building including a large number of layers, for example: near 25th to 30th floors of a building).

The latitude and longitude information, the first height information, and the positioning date and time in the position information database D1 are acquired every first time T1 by the server communication unit 31 of the information server 30 communicating with the communication terminals (the 51st communication terminal M51 to the 55th communication terminal M55) registered in the position information database D1 or by the server communication unit 31 communicating with a base station or the like in the communication carrier.

The area name corresponding to the latitude and longitude information in the position information database D1 is obtained by converting the latitude and longitude information of the communication terminal into the area name using a table (not illustrated) for converting the latitude and longitude information into the area name.

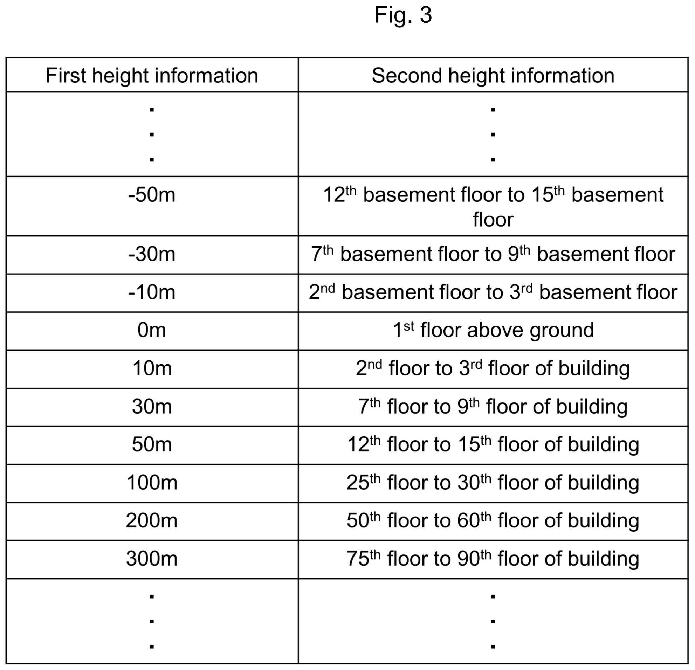

The height level (second height information) corresponding to the height information (first height information) in the position information database D1 is obtained by converting the first height information of the communication terminal into the second height information using a table (see the height information conversion table D2 and Fig. 3) for converting the first height information into the second height information.

The latitude and longitude information and the first height information in the position information database D1 are desirably recorded not only at the present time but also in a past certain period (for example, 1 hour).

The movement direction ("northward", "upward", or the like) and the movement locus of the corresponding communication terminal are calculated on the basis of the current latitude and longitude information and the first height information, and the past latitude and longitude information and the first height information for a certain period of time.

In a case where the moving distance in a horizontal direction during the certain period is longer than a value obtained by multiplying the moving distance in a vertical direction during said certain period by a predetermined coefficient c1 (c1 ≥ 1), the movement direction in the horizontal direction (such as "northward") is calculated as the movement direction of said communication terminal.

In a case where a value obtained by multiplying the moving distance in the vertical direction during said certain period by the predetermined coefficient c1 is longer than the moving distance in the horizontal direction during said certain period, the movement direction in the vertical direction ("upward" or the like) is calculated as the movement direction of said communication terminal.

In a case where both the moving distance in said horizontal direction during said certain period and a value obtained by multiplying the moving distance in the vertical direction during said certain period by the predetermined coefficient c1 are equal to a third distance threshold Thrd3 (for example, Thrd3 ≤ 1 m), it is determined that there is no motion of said communication terminal ("no motion").

The movement locus includes a variation history of the position of the communication terminal in the horizontal direction and the height direction.

The information regarding safety in the position information database D1 indicates to the server communication unit 31 of the information server 30 whether or not a safety answer operation has been performed from the communication terminals (the 51st communication terminal M51 to the 55th communication terminal M55) registered in the position information database D1, and is initialized when the disaster information is transmitted, and a parameter (safety type parameter sp) in the safety type field is set to an initial value (sp = 1) indicating that the safety of the users of all the communication terminals is unknown (the safety answer operation has not been performed).

After the initialization, the safety information in the position information database D1 is updated when the safety answer information is received from said communication terminal.

When the user of the communication terminal performs a specific operation (safety answer operation) for a safety answer on the position information program installed in said communication terminal, the value of the parameter in the safety type field is changed to 0 (safety type parameter sp = 0 indicating that there is an answer). That is, in a state where the specific operation (safety answer operation) for said safety answer is not performed, the initial value: 1 is maintained.

### (Group Information Database D3)

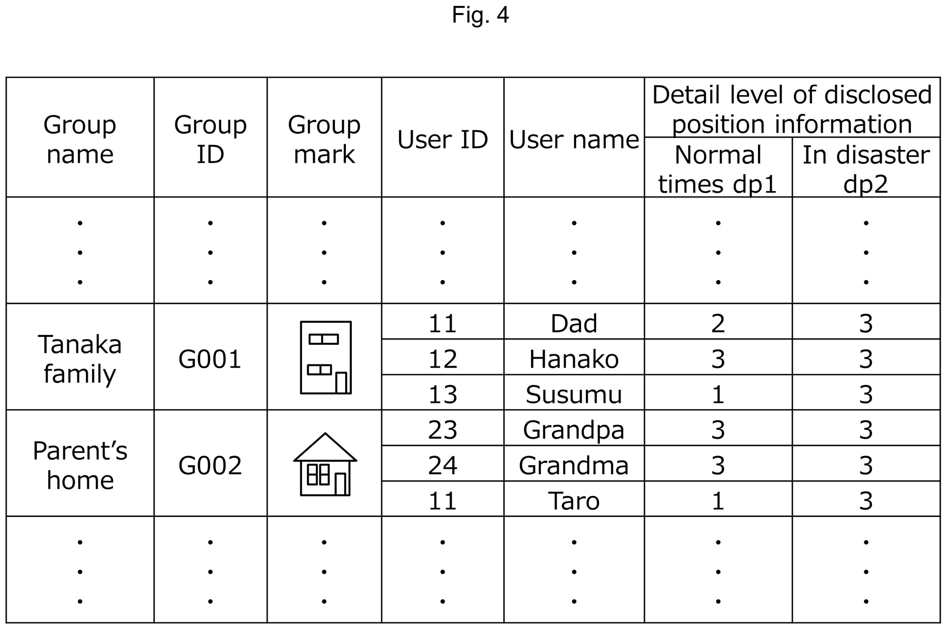

The group information database D3 indicates a relationship between information regarding a group used in a group chat (group message) in the position information program and information regarding users belonging to said group (see Fig. 4).

The information regarding the group is information (information set by the group setting operation) input by the user via the communication terminal, and includes a group name, a group ID (group identification number), and a group mark (may be a photograph).

The information regarding the users belonging to the group is the information input by the user through the communication terminal (the information set by the position information disclosure designation operation), and includes user names belonging to the group, user IDs belonging to the group, the detail level (first detail level parameter dp1) of the position information to be disclosed in normal times (while the safety type parameter sp is 0), and the detail level (second detail level parameter dp2) of the position information to be disclosed at the time of disaster (while the safety type parameter sp is 1).

In the present embodiment, a mode in which the first detail level parameter dp1 and the second detail level parameter dp2 have three stages (1: disclosing coarse position information (for example, the prefecture level) without height information, 2: disclosing moderately coarse position information (for example, the municipal level) with height information, and 3: disclosing fine position information (for example, the address level) with height information) will be described, but a mode having two stages or four or more stages may be employed.

Note that the second detail level parameter dp2 is desirably set to a detail level equal to or finer than the first detail level parameter dp1.

For example, it is conceivable that the first detail level parameter dp1 can be adjusted by the user in said three stages, and the second detail level parameter dp2 is fixed at the finest detail level.

In the present embodiment, the user with the user ID: 11 (user name: dad, first detail level parameter dp1: 2, second detail level parameter dp2: 3), the user with the user ID: 12 (user name: Hanako, first detail level parameter dp1: 3, second detail level parameter dp2: 3), and the user with the user ID: 13 (user name: Susumu, first detail level parameter dp1: 1, second detail level parameter dp2: 3) belong to a group name: Tanaka family (group ID: G001).

In addition, the user with the user ID: 23 (user name: grandpa, first detail level parameter dp1: 3, second detail level parameter dp2: 3), the user with the user ID: 24 (user name: grandma, first detail level parameter dp1: 3, second detail level parameter dp2: 3), and the user with the user ID: 11 (user name: Taro, first detail level parameter dp1: 1, second detail level parameter dp2: 3) belong to a group name: parent's home (group ID: G002).

### (Evacuation Shelter Database D4)

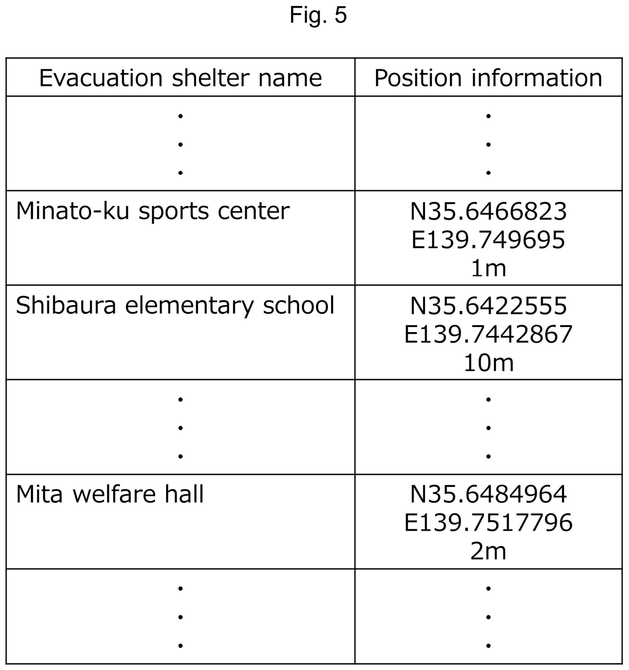

The evacuation shelter database D4 indicates a relationship between a name of an evacuation shelter and position information (see Fig. 5).

### (Map Information Database D5)

The map information database D5 is map information including latitude information, longitude information, and height information (not illustrated). A planar map and a topographical cross-sectional view between any points are displayed on the basis of the map information database D5.

### (Server Control Unit 35 of Information Server 30)

The server control unit 35 of the information server 30 executes a program installed in the server recording unit 33, and controls the server communication unit 31 and the server recording unit 33.

Specifically, when the information server 30 receives the disaster information from the information source transmission unit 20, the server control unit 35 transmits said disaster information to the communication terminals (the 51st communication terminal M51 to the 55th communication terminal M55) registered in the position information database D1 via the server communication unit 31.

Furthermore, the server control unit 35 updates the position information database D1 and the group information database D3 recorded in the server recording unit 33 when the information server 30 receives the information regarding the user, the information regarding the group to which the user belongs, and the information regarding the detail level of the position information to be disclosed from the 51st communication terminal M51 to the 55th communication terminal M55 by the user setting operation, the group setting operation, the position information disclosure designation operation, or the like.

Furthermore, when the information server 30 receives the position information of the 51st communication terminal M51 to the 55th communication terminal M55, the server control unit 35 updates the position information in the position information database D1 recorded in the server recording unit 33.

Furthermore, when the information server 30 receives the safety answer information from the 51st communication terminal M51 to the 55th communication terminal M55 on the basis of the safety answer operation by the user of the communication terminal, the server control unit 35 updates the safety type parameter sp in the position information database D1 recorded in the server recording unit 33.

When the 51st communication terminal M51 to the 55th communication terminal M55 transmit the safety answer information to the information server 30 on the basis of the safety answer operation, the position information is also transmitted after positioning.

The position information in the position information database D1 is updated on the basis of the transmitted position information.

Note that a mode may be employed in which, when the safety answer information is transmitted on the basis of the safety answer operation, the position information is not transmitted.

Further, on the basis of the position information database D1, the height information conversion table D2, and the group information database D3, the server control unit 35 transmits, via the server communication unit 31, the position information and the safety information of another user (another person) belonging to the group to which the user (the person himself/herself) logging in said position information program belongs to the communication terminal of the user (the person himself/herself) logging in said position information program.

For example, since the user with the user ID: 11 (user name: dad, Taro) belongs to the group with the group name: Tanaka family (group ID: G001) and the group with the group name: parent's home (group ID: G002), the position information and the safety information of the users (the user with the user ID: 12 and the user with the user ID: 13 belonging to the group with group name: Tanaka family (group ID: G001), and the user with the user ID: 23 and user with the user ID: 24 belonging to the group with group name: parent's home (group ID: G002)) belonging to these groups are transmitted to the 51st communication terminal M51 corresponding to the user ID: 11.

As the position information transmitted from the information server 30 to the communication terminal, the position information with the finest detail level is used, and the detail level of the position information displayed on the display unit 12 of the communication terminal is adjusted on the basis of the safety information (the safety type parameter sp).

Specifically, for a user with the safety type parameter sp of 0, the position information is displayed with the detail level of the position information to be disclosed in normal times (first detail level parameter dp1), and for a user with the safety type parameter sp of 1, the position information is displayed with the detail level of the position information to be disclosed at the time of disaster (second detail level parameter dp2).

However, a mode may be employed in which, at the stage of transmitting the position information from the information server 30 to each communication terminal, the position information is transmitted to each communication terminal in a state where the detail level is changed for each communication terminal to be transmitted and for each user who discloses the position information on the basis of the safety information (safety type parameter sp) recorded in the position information database D1.

### (Position Information Program)

Next, details of the position information program will be described.

The position information program executes a reception step and first to seventh display steps.

In the reception step, position information of another communication terminal is received from the information server 30.

In the first display step, the first screen P1 (display of disaster information and position information for each user, see Figs. 6 and 7) is displayed on the display unit 12 of the communication terminal in which the position information program is installed.

In the second display step, the second screen P2 (user position information map display, see Figs. 8 and 9) is displayed on the display unit 12 of said communication terminal.

In the third display step, the third screen P3 (specific user position cross-sectional display, see Fig. 10) is displayed on the display unit 12 of said communication terminal.

In the fourth display step, the fourth screen P4 (specific user position planar display, see Fig. 11) is displayed on the display unit 12 of said communication terminal.

In the fifth display step, the fifth screen P5 (evacuation shelter list display, see Fig. 12) is displayed on the display unit 12 of said communication terminal.

In the sixth display step, the sixth screen P6 (specific evacuation shelter position cross-sectional display, see Fig. 13) is displayed on the display unit 12 of said communication terminal.

In the seventh display step, the seventh screen P7 (specific evacuation shelter position planar display, see Fig. 14) is displayed on the display unit 12 of said communication terminal.

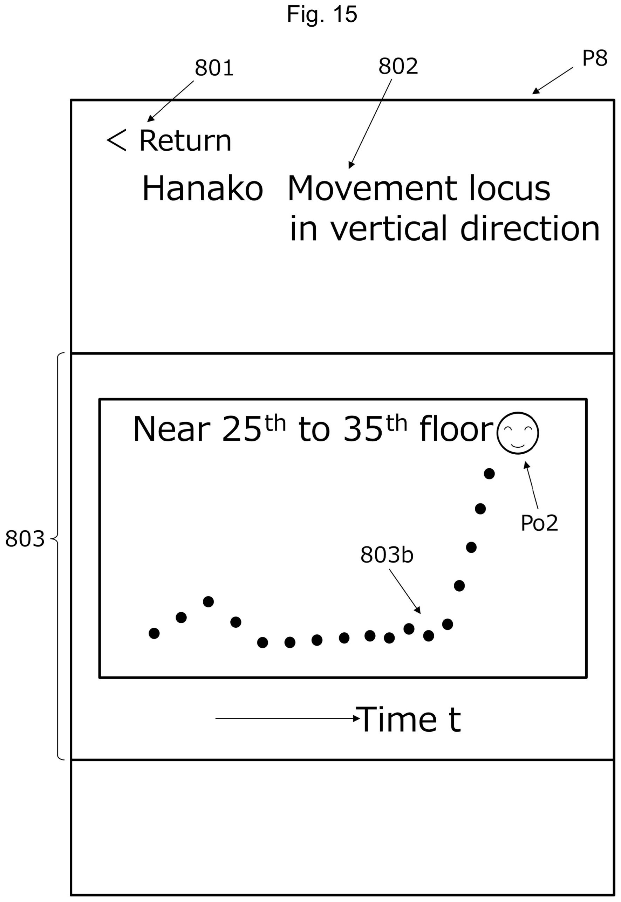

In the eighth display step, the eighth screen P8 (movement locus cross-sectional display, see Fig. 15) is displayed on the display unit 12 of said communication terminal.

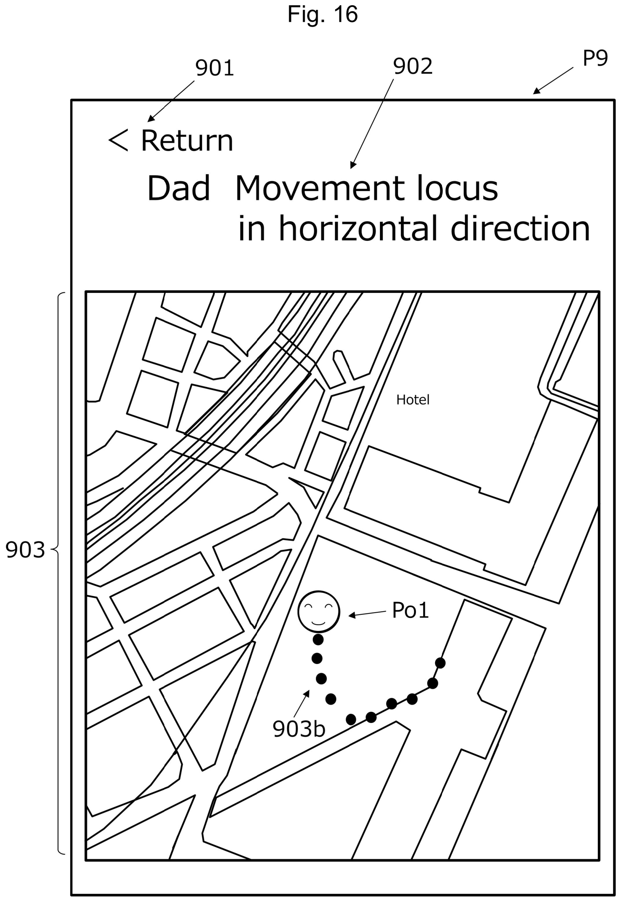

In the ninth display step, the ninth screen P9 (movement locus planar display, see Fig. 16) is displayed on the display unit 12 of said communication terminal.

Note that the "first selection screen" described in the claims corresponds to the first screen P1.

Further, the "second selection screen" described in the claims corresponds to the fifth screen P5.

Further, the "first result screen" described in the claims corresponds to the third screen P3.

Further, the "second result screen" described in the claims corresponds to the sixth screen P6.

Further, the "third result screen" described in the claims corresponds to the fourth screen P4.

Further, the "fourth result screen" described in the claims corresponds to the seventh screen P7.

Further, the "fifth result screen" described in the claims corresponds to the second screen P2.

Further, the "sixth result screen" described in the claims corresponds to the eighth screen P8.

Further, the "seventh result screen" described in the claims corresponds to the ninth screen P9.

Further, a "predetermined operation" described in the claims corresponds to a tap of a group member position information display switching button 103a.

One of the first screen P1 to the seventh screen P7 is displayed on the display unit 12 of the communication terminal according to the operation of the user.

### (First Screen P1)

The first screen P1 includes a disaster information display region 101, a user position information display region 103, and a screen switching button display region 105 (see Figs. 6 and 7).

In the disaster information display region 101, information (area, date and time, maximum seismic intensity, and magnitude) about the earthquake that occurred immediately before is displayed, and a map centering on the region included in the information regarding said earthquake is displayed in the background.

In the disaster information display region 101, a disaster level mark ma1 indicating the scale of the disaster (numerical value of the maximum predicted seismic intensity) is provided for the first disaster information and the second disaster information.

In the present embodiment, the disaster level mark ma1 is displayed by an outline character.

In the present embodiment, the disaster level mark ma1 is surrounded by a frame having a substantially rectangular shape, but the frame may be omitted, and a mode may be employed in which only the numerical value of the disaster scale is displayed in the disaster information display region 101.

When no earthquake has occurred within a certain period of time in the past, indication that no earthquake has occurred and detailed position information of said communication terminal are displayed in the disaster information display region 101.

Note that a mode may be employed in which, in the disaster information display region 101, only indication that no earthquake has occurred is displayed, and display including detailed position information of said communication terminal is not performed.

In the user position information display region 103, for each group to which the user of the communication terminal belongs, a group mark, a group name, a user mark related to a belonging user, a user name, position information including a movement direction, and an acquisition date and time of the position information are provided.

Figs. 6 and 7 illustrate an example in which, for each of the two groups (first group name: Tanaka family, group ID: G001, second group name: parent's home, group ID: G002) to which the user with the user ID: 11 belongs, position information or the like of the user belonging to said group is displayed.

The user position information display region 103 includes the group member position information display switching button 103a.

When the group member position information display switching button 103a is tapped, the screen is switched to the second screen P2 (user position information map display, see Figs. 8 and 9). The second screen P2 includes position information of the user of said communication terminal and the user of the group corresponding to the tap operation.

Note that, when only the user of said communication terminal is set to the group and the user of another communication terminal is not set, only the information regarding the user of said communication terminal (user mark, user name, position information, and acquisition date and time of position information) is displayed. In this case, the information regarding the group (group mark, group name, and the like) may be omitted.

When the amount of information displayed in the user position information display region 103 is large, the user position information is displayed in a state of being scrollable in the vertical direction. Fig. 6 illustrates a state where an upper region in the user position information display region 103 is displayed, and Fig. 7 illustrates a state where a lower region in the user position information display region 103 is displayed.

The detail level of the position information displayed in the user position information display region 103 is determined on the basis of the safety information (safety type parameter sp) in the position information database D1 and the detail level (first detail level parameter dp1 and second detail level parameter dp2) of the position information to be disclosed in the group information database D3.

For the user whose safety type parameter sp is 0, that is, the user who has received the safety answer, the position information of said user is displayed with the detail level of the position information to be disclosed in normal times on the basis of the first detail level parameter dp1.

Fig. 6 illustrates an example in which the safety type parameter sp of the user name: Hanako belonging to the group name: Tanaka family is 0, and the position information is displayed with the detail level (first detail level parameter dp1: 3 (detailed position information level with height information)) of the position information to be disclosed in normal times.

Fig. 6 illustrates an example in which the safety type parameter sp of the user name: Susumu belonging to the group name: Tanaka family is 0, and the position information is displayed with the detail level (first detail level parameter dp1: 1 (coarse position information level without height information)) of the position information to be disclosed in normal times.

Even if the user ID is the same, the detail level of the position information disclosed in each group can be made different.

Figs. 6 and 7 illustrate an example in which the user with the user ID: 11 causes display, inside the group name: Tanaka family, of moderate position information (Minato-ku, Tokyo) with height information in normal times on the basis of the first detail level parameter dp1, and causes display, inside the group name: parent's home, of coarse position information (Tokyo) without height information in normal times on the basis of the first detail level parameter dp1.

For a user whose safety type parameter sp1 is 1, that is, a user who has not performed the safety answer operation, the position information of said user is displayed with the detail level of the position information to be disclosed at the time of disaster on the basis of the second detail level parameter dp2.

Figs. 6 and 7 illustrate an example in which the safety type parameter sp of the user name: grandpa belonging to the group name: parent's home is 1, and the position information is displayed with the detail level (second detail level parameter dp2: 3 (detailed position information level with height information) of the position information to be disclosed at the time of disaster.

In addition, Fig. 7 illustrates an example in which the safety type parameter sp of the user name: grandma belonging to the group name: parent's home is 1, and the position information is displayed with the detail level (second detail level parameter dp2: 3 (detailed position information level with height information) of the position information to be disclosed at the time of disaster.

Further, in the vicinity of any one of the user mark, the user name, and the position information, a safety unconfirmation mark ma2 is provided which is turned on in one of a case where the safety type parameter sp is 1 (the safety answer is not given) and a case where the safety type parameter sp is 0 (the safety answer is given) and is turned off otherwise.

In the present embodiment, as said safety unconfirmation mark ma2, a mark (mark with an exclamation mark inside a rhombus) that is turned on in a case where the safety type parameter is 1 (no safety answer is given) and turned off in a case where the safety type parameter is 0 (safety answer is given) is provided in the upper right of the user mark.

However, the shape of the safety unconfirmation mark ma2 is not limited to this, and may be another shape such as a circular frame surrounding the periphery of the user mark.

When the vicinity of the position information for each user displayed in the user position information display region 103 is tapped, the screen is switched to the third screen P3 (specific user position cross-sectional display) or the fourth screen P4 (specific user position planar display).

Specifically, a distance (first distance di1) between a user terminal and a group member terminal is calculated on the basis of the position information of said communication terminal (said user terminal) and the position information of the communication terminal (said group member terminal) of the user corresponding to said tap operation. When the first distance di1 is shorter than the first distance threshold Thrd1 (for example, Thrd1 = 2 km), the screen is switched to the third screen P3, and when the first distance di1 is longer than or equal to the first distance threshold Thrd1, the screen is switched to the fourth screen P4.

When the vicinity of the movement direction of each user displayed in the user position information display region 103 is tapped, the screen is switched to the eighth screen P8 (movement locus cross-sectional display) or the ninth screen P9 (movement locus planar display).

Specifically, when the tapped movement direction indicates the movement direction in the vertical direction (such as "upward"), the screen is switched to the eighth screen P8. When the tapped movement direction indicates the movement direction in the horizontal direction (such as "northward"), the screen is switched to the ninth screen P9. When the tapped movement direction indicates "no movement", the screen is not switched.

The screen switching button display region 105 includes a home button 105a, a weather button 105b, a disaster information button 105c, an evacuation shelter button 105d, and a setting button 105e.

When the home button 105a is tapped, the screen is switched to the first screen P1.

When the home button 105a is tapped while the first screen P1 is displayed, the screen is not switched.

When the weather button 105b is tapped, the screen is switched to a weather forecast screen (not illustrated).

When the disaster information button 105c is tapped, the screen is switched to the display of a chronological list of disaster information (not illustrated).

When the evacuation shelter button 105d is tapped, the screen is switched to the fifth screen P5 (see evacuation shelter list display, Fig. 12).

When the setting button 105e is tapped, the screen is switched to an operation screen display (not illustrated) such as setting of the user of the group.

By displaying the first screen P1, it is possible to output position information of users of communication terminals different from the communication terminal that displays the first screen P1.

### (Second Screen P2)

The second screen P2 includes a first return button 201, a first name display region 202, a group member terminal position information display region 203, and a first map display region 204 (see Figs. 8 and 9).

When the first return button 201 is tapped, the screen is switched to the first screen P1.

The first name display region 202 displays the name of the group.

Figs. 8 and 9 illustrate an example in which "parent's home" is displayed as the group name in the first name display region 202.

The group member terminal position information display region 203 displays the position information of the communication terminal (group member terminal) of the user selected via the communication terminal (user terminal) displaying the second screen P2 among the users belonging to said group in characters.

When the group member is not selected, a message prompting said selection (for example, tap the member's icon) is displayed in the group member terminal position information display region 203.

Fig. 8 illustrates an example in which a word prompting said selection is displayed in the group member terminal position information display region 203 in a state where the group member is not selected.

Fig. 9 illustrates an example in which the position information of the communication terminal of the user name: grandma is displayed in the group member terminal position information display region 203 in a state where the group member is selected.

The first map display region 204 displays a map including a place where the communication terminals of all the users belonging to said group are located.

The map display of the first map display region 204 is performed at the maximum scale at which the place where the communication terminals of all the users belonging to the group are located can be displayed on said map.

In the map display of the first map display region 204, the user mark corresponding to each user belonging to the group is illustrated at a place where the communication terminal of each said user is located.

However, in addition to the user mark, and/or the user name may be indicated.

Figs. 8 and 9 illustrate an example in which, as the position information of the communication terminal of the user belonging to the group name: the parent's home, the position information of the 51st communication terminal M51 of the user with the user ID: 11 (user name: dad, Taro), the 54th communication terminal M54 of the user with the user ID: 23 (user name: grandpa), and the 55th communication terminal M55 of the user with the user ID: 24 (user name: grandma) are displayed on the map using the user mark in the group member terminal position information display region 203.

The second screen P2 enables the position information of all the users belonging to the group to be visually recognized on the map.

When a specific operation (for example, an operation of sliding in the right direction, or the like) for switching to the third screen P3 is performed in a state where the second screen P2 is displayed, the screen is switched to the third screen P3.

When a specific operation (for example, an operation of sliding in the left direction, or the like) for switching to the first screen P1 is performed in a state where the second screen P2 is displayed, the screen may be switched to the first screen P1.

When the screen switching button display region 105 is provided on the second screen P2, the screen may be switched to the first screen P1 by tapping the home button 105a.

### (Third Screen P3)

The third screen P3 includes a second return button 301, a second name display region 302, a first numerical information display region 303, and a first topographical cross-sectional display region 304 (see Fig. 10).

When the second return button 301 is tapped, the screen is switched to the first screen P1.

The second name display region 302 displays the user name of the communication terminal (user terminal) that displays the third screen P3 and the user name selected in the group.

Fig. 10 illustrates an example in which "dad" as the user name of the user terminal and "Hanako" as the user name of the group member terminal are displayed in the second name display region 302.

The first numerical information display region 303 displays the height difference and the straight-line distance between said user terminal and the communication terminal (group member terminal) of the user corresponding to said selected user name.

Said height difference and said straight-line distance are expressed using a length measuring unit.

Fig. 10 illustrates an example in which the group member terminal (52nd communication terminal M52) is at a position 99 m higher than the user terminal (51st communication terminal M51), and the straight-line distance between the user terminal (51st communication terminal M51) and the group member terminal (52nd communication terminal M52) is 1.6 km.

The first topographical cross-sectional display region 304 displays a topographical cross section between a place (first region Po1) where said user terminal is located and a place (second region Po2) where said group member terminal is located.

In the topographical cross-sectional display of the first topographical cross-sectional display region 304, the user mark of the user terminal corresponding to the first region Po1 is indicated in the first region Po1, and the user mark of the group member terminal corresponding to the second region Po2 is indicated in the second region Po2.

However, in addition to the user mark, and/or the user name may be indicated.

In the topographical cross-sectional display of the first topographical cross-sectional display region 304, the second height information of the first region Po1 and the second height information of the second region Po2 are indicated.

That is, in the height difference of the first numerical information display region 303, a specific numerical value is indicated by using the length measurement unit, and in the height information of the first topographical cross-sectional display region 304, the degree of height is indicated without using the length measurement unit.

### (Fourth Screen P4)

The fourth screen P4 includes a third return button 401, a third name display region 402, a second numerical information display region 403, and a second map display region 404 (see Fig. 11).

When the third return button 401 is tapped, the screen is switched to the first screen P1.

The third name display region 402 displays the user name of the communication terminal (user terminal) that displays the fourth screen P4 and the user name selected in the group.

Fig. 11 illustrates an example in which "dad" as the user name of the user terminal and "Hanako" as the user name of the group member terminal are displayed in the third name display region 402.

The second numerical information display region 403 displays a straight-line distance between said user terminal and the communication terminal (group member terminal) of the user corresponding to said selected user name.

Fig. 11 illustrates an example in which the straight-line distance between the user terminal (51st communication terminal M51) and the group member terminal (52nd communication terminal M52) is 3.2 km.

The second map display region 404 displays a map including a place (first region Po1) where said user terminal is located and a place (second region Po2) where said group member terminal is located.

The map display of the second map display region 404 is performed at the maximum scale at which the first region Po1 and the second region Po2 can be displayed on said map.

In the map display of the second map display region 404, the user mark corresponding to said user is illustrated in the first region Po1 and the second region Po2.

However, in addition to the user mark, and/or the user name may be indicated.

Further, in the map display of the second map display region 404, an arrow 404a from the first region Po1 to the second region Po2 is indicated.

Further, in the map display of the second map display region 404, a movement locus 404b of at least one of the first region Po1 or the second region Po2 is indicated.

Fig. 11 illustrates an example in which the movement locus 404b of the second region Po2 is displayed.

### (Fifth Screen P5)

The fifth screen P5 includes an evacuation shelter display region 501 and a screen switching button display region 105 (see Fig. 12).

The evacuation shelter display region 501 displays the names of evacuation shelters and the straight-line distances to said evacuation shelters in the order of proximity to the communication terminal displaying the fifth screen P5.

The screen switching button display region 105 is the same as the screen switching button display region 105 of the first screen P1.

When the region in which the evacuation shelter name and the distance to the evacuation shelter are displayed in the evacuation shelter display region 501 is tapped, the screen is switched to the sixth screen P6 (specific evacuation shelter position cross-sectional display) or the seventh screen P7 (specific evacuation shelter position planar display).

Specifically, the distance (second distance di2) between said user terminal and said selected evacuation shelter is calculated on the basis of the position information of said communication terminal (user terminal) and the position information of the evacuation shelter (selected evacuation shelter) corresponding to said tap operation. When the second distance di2 is shorter than the second distance threshold Thrd2 (for example, Thrd2 = 500 m), the screen is switched to the sixth screen P6, and when the second distance di2 is longer than or equal to the second distance threshold Thrd2, the screen is switched to the seventh screen P7.

### (First Distance Threshold Thrd1 and Second Distance Threshold Thrd2)

In the present embodiment, an example in which the first distance threshold Thrd1 is longer than the second distance threshold Thrd2 will be described, but the first distance threshold Thrd1 and the second distance threshold Thrd2 may be the same value, or the first distance threshold Thrd1 may be shorter than the second distance threshold Thrd2.

### (Sixth Screen P6)

The sixth screen P6 includes a fourth return button 601, a fourth name display region 602, a third numerical information display region 603, and a second topographical cross-sectional display region 604 (see Fig. 13).

When the fourth return button 601 is tapped, the screen is switched to the first screen P1.

The fourth name display region 602 displays a user name of the communication terminal (user terminal) that displays the sixth screen P6 and an evacuation shelter name selected in the evacuation shelter display region 501 on the fifth screen P5.

Fig. 13 illustrates an example in which "dad" as the user name of the user terminal and "Minato-ku Sports Center" as the selected evacuation shelter name are displayed in the fourth name display region 602.

The third numerical information display region 603 displays the height difference and the straight-line distance between said user terminal and the evacuation shelter corresponding to said selected evacuation shelter name.

Said height difference and said straight-line distance are expressed using a length measuring unit.

Fig. 13 illustrates an example in which said evacuation shelter (Minato-ku Sports Center) is located at the same height as the user terminal (the 51st communication terminal M51), and the straight-line distance between the user terminal (the 51st communication terminal M51) and said evacuation shelter (Minato-ku Sports Center) is 203 m.

The second topographical cross-sectional display region 604 displays a topographical cross section between a place where said user terminal is located (first region Po1) and a place where said evacuation shelter is located (third region Po3).

In the topographical cross-sectional display of the second topographical cross-sectional display region 604, the user mark of the user terminal corresponding to the first region Po1 is illustrated in the first region Po1, and the mark of the evacuation shelter corresponding to the third region Po3 is illustrated in the third region Po3.

However, in addition to the user mark, and/or the user name may be indicated.

Further, in addition to the mark of the evacuation shelter, the evacuation shelter name may be indicated.

In the topographical cross-sectional display of the second topographical cross-sectional display region 604, the second height information of the first region Po1 and the second height information of the third region Po3 are indicated.

That is, in the height difference of the third numerical information display region 603, a specific numerical value is indicated by using the measurement unit of the length, and in the height information of the second topographical cross-sectional display region 604, the degree of the height is indicated without using the measurement unit of the length.

### (Seventh Screen P7)

The seventh screen P7 includes a fifth return button 701, a fifth name display region 702, a fourth numerical information display region 703, and a third map display region 704 (see Fig. 14).

When the fifth return button 701 is tapped, the screen is switched to the first screen P1.

The fifth name display region 702 displays a user name of the communication terminal (user terminal) that displays the seventh screen P7 and an evacuation shelter name selected in the evacuation shelter display region 501 on the fifth screen P5.

Fig. 14 illustrates an example in which "dad" as the user name of the user terminal and "Mita Welfare Hall" as the selected evacuation shelter name are displayed in the fifth name display region 702.

The fourth numerical information display region 703 displays a straight-line distance between said user terminal and the evacuation shelter corresponding to said selected evacuation shelter name.

Fig. 14 illustrates an example in which the straight-line distance between the user terminal (51st communication terminal M51) and said evacuation shelter (Minato-ku Sports Center) is 565 m.

The third map display region 704 displays a map including a place (first region Po1) where said user terminal is located and a place (third region Po3) where said evacuation shelter is located.

The map display of the third map display region 704 is performed at the maximum scale at which the first region Po1 and the third region Po3 can be displayed on said map.

In the map display of the third map display region 704, the user mark of the user terminal corresponding to the first region Po1 is indicated in the first region Po1, and the mark of the evacuation shelter corresponding to the third region Po3 is indicated in the third region Po3.

However, in addition to the user mark, and/or the user name may be indicated.

Further, in addition to the mark of the evacuation shelter, the evacuation shelter name may be indicated.

Further, in the map display of the third map display region 704, an arrow 704a from the first region Po1 to the third region Po3 is indicated.

### (Application Example of Fifth Screen P5 to Seventh Screen P7)

In the present embodiment, an example has been described in which the fifth screen P5 is evacuation shelter information, and the sixth screen P6 and the seventh screen P7 indicate a positional relationship between one of the evacuation shelters indicated by said evacuation shelter information and the communication terminal.

However, the fifth screen P5 may be real estate information different from the evacuation shelter, and the sixth screen P6 and the seventh screen P7 may indicate a positional relationship between a piece of real estate indicated in said real estate information and the communication terminal.

### (Eighth Screen P8)

The eighth screen P8 includes a sixth return button 801, a sixth name display region 802, and a first locus display region 803 (see Fig. 15).

When the sixth return button 801 is tapped, the screen is switched to the first screen P1.

The sixth name display region 802 displays the user name selected in the group and the type of the movement locus (the movement locus in the vertical direction).

Fig. 15 illustrates an example in which one user name "Hanako" of the group member terminal is displayed as the selected user name (the user name of the user terminal or the group member terminal) in the sixth name display region 802.

The first locus display region 803 displays height information of a place (first region Po1 or second region Po2) where said user terminal or said group member terminal is located and a movement locus 803b (temporal transition of height) of said user terminal or said group member terminal in the vertical direction.

Fig. 15 illustrates an example in which the first locus display region 803 displays the height information and the movement locus 803b of the location (second region Po2) where the group member terminal with the user name "Hanako" is located.

In the height information of the place (first region Po1 or second region Po2) where said user terminal or said group member terminal is located in the first locus display region 803, the degree of height is indicated without using the length measurement unit.

### (Ninth Screen P9)

The ninth screen P9 includes a seventh return button 901, a seventh name display region 902, and a second locus display region 903 (see Fig. 16).

When the seventh return button 901 is tapped, the screen is switched to the first screen P1.

The seventh name display region 902 displays the user name selected in the group and the type of the movement locus (the movement locus in the horizontal direction).

Fig. 16 illustrates an example in which the user name "dad" of the user terminal is displayed as the selected user name (the user name of the user terminal or the group member terminal) in the seventh name display region 902.

The second locus display region 903 displays a map including a place (the first region Po1 or the second region Po2) where said user terminal or said group member terminal is located and a movement locus 903b of said user terminal or said group member terminal in the horizontal direction.

Fig. 16 illustrates an example in which a map including a place (first region Po1) where the user terminal having the user name "dad" is located and a movement locus 903b are displayed in the second locus display region 903.

### (Application Example 1 of Height Information Notation)

In the present embodiment, an example in which the second height information is used to display the height information of the first screen P1 or the like will be described.

However, the first height information may be used to display the height information of the first screen P1 or the like.

### (Application Example 2 of Height Information Notation)

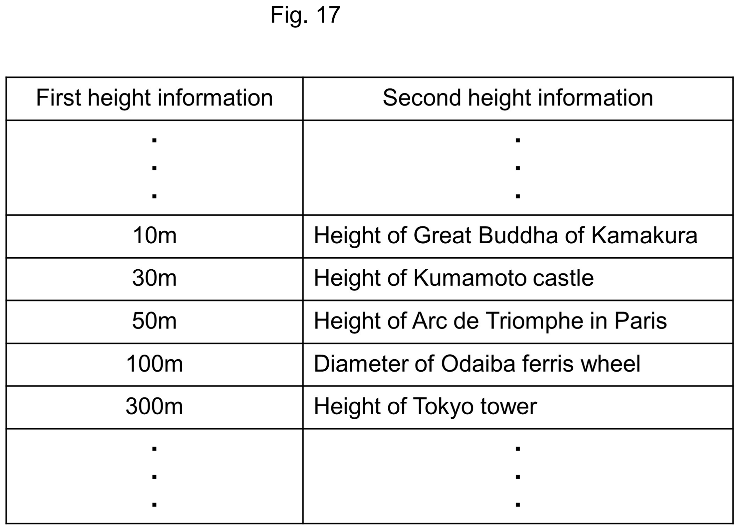

In addition, the second height information may be another information that is different from the number of floors of the building and that makes it easy to intuitively grasp the height (see Fig. 17).

Fig. 17 illustrates an example in which the second height information includes information on the height of a famous building, and the height information conversion table D2 includes information for replacing the measurement unit of the length with information on the height of the famous building.

### (Application Example Regarding Adjustment of Detail Level of Position Information)

In the present embodiment, an example has been described in which the detail level of the position information is determined on the basis of the safety type parameter sp, the first detail level parameter dp1, the second detail level parameter dp2, and the like.

However, the detail level of the position information may be determined on the basis of the safety type parameter sp, the first detail level parameter dp1, the second detail level parameter dp2, and/or the positioning accuracy information.

### (Application Example of Display of Third Screen P3 or the like)

In the present embodiment, an example has been described in which the third screen P3 and the like are displayed on the communication terminal on the assumption that a disaster occurs.

However, the third screen P3 or the like may be displayed on the communication terminal not only at the time of occurrence of a disaster but also in normal times.

### (Effect of Displaying Result Screen (Third Screen P3 and Sixth Screen P6) Including Topographical Cross Section)

It is possible to visually recognize a positional relationship regarding the height between the user of the communication terminal and the user of the selected different communication terminal or a positional relationship regarding the height between the user of the communication terminal and the selected real estate (evacuation shelter).

It is easy to grasp the position information of the others (different communication terminal or real estate) in consideration of the height difference, for example, during a disaster when evacuation is required in consideration of tsunami, at the time when the other person is in the vicinity but is in a place with a different height and cannot find the whereabouts of the difference, or the like.

### (Effect of Displaying Height Information and Movement Direction on Selection Screen (First Screen P1))

It is easy to grasp the behavior of the user of the different communication terminal.

### (Effect of Displaying Second Height Information on Selection Screen (First Screen P1))

As compared with a mode in which height information is displayed using a length measurement unit, such as meter display, it is possible to intuitively grasp the degree of height by the height information.

### (Effect of Displaying Two Types of Height Information on Result Screen Including Topographical Cross Section (Third Screen P3, Sixth Screen P6))

The height difference can be grasped by objective height information, and the degree of height of each region can be grasped by sensuous height information.

### (Effect of Switching Between Map Display (Fourth Screen P4 and Seventh Screen P7) and Topographical Cross-Sectional Display (Third screen P3 and Sixth Screen P6) According to Distance)

Topographical cross-sectional display and planar map display can be switched according to the necessity of grasping the height difference.

### (Effect of Displaying Movement Locus in Map Display (Fourth Screen P4))

It is easy to grasp the behavior of at least one of the user of said communication terminal or the users of said different communication terminals.

### (Effect of Displaying Position Information of Plurality of Communication Terminals on One Screen on Result Screen (Second Screen P2))

The positions of the user of said communication terminal and the users of said different communication terminals can be grasped on one screen.

### (Effect of Displaying Movement Locus on Eighth Screen P8 and Ninth Screen P9)

It is easy to grasp the behavior in the vertical direction or the horizontal direction of at least one of the user of said communication terminal or the users of said different communication terminals according to the movement direction.

Although some embodiments of the present invention have been described, these embodiments have been presented as examples, and are not intended to limit the scope of the invention. These embodiments can be implemented in various other forms, and various omissions, substitutions, and changes can be made without departing from the gist of the invention. These embodiments and modifications thereof are included in the scope and gist of the invention and are included in the invention described in the claims and the equivalent scope thereof.

### Reference Signs List

1 Position information output system
11 Communication unit
12 Display unit
13 Recording unit
15 Control unit
16 Position information acquisition unit
20 Information source transmission unit
30 Information server
31 Server communication unit
33 Server recording unit
35 Server control unit
70 Input/output terminal
101 Disaster information display region
103 User position information display region
103aGroup member position information display switching button
105 Screen switching button display region
105a Home button
105b Weather button
105c Disaster information button
105dEvacuation shelter button
105e Setting button
201 First return button
202 First name display region
203 Group member terminal position information display region
204 First map display region
301 Second return button
302 Second name display region
303 First numerical information display region
304 First topographical cross-sectional display region
401 Third return button
402 Third name display region
403 Second numerical information display region
404 Second map display region
404aArrow
404b Movement locus
501 Evacuation shelter display region
601 Fourth return button
602 Fourth name display region
603 Third numerical information display region
604 Second topographical cross-sectional display region
701 Fifth return button
702 Fifth name display region
703 Fourth numerical information display region
704 Third map display region
704aArrow
801 Sixth return button
802 Sixth name display region
803 First locus display region
803b Movement locus
901 Seventh return button
902 Seventh name display region
903 Second locus display region
903b Movement locus
c1 Predetermined coefficient
D1 Position information database
D2 Height information conversion table
D3 Group information database
D4 Evacuation shelter database
D5 Map information database
i1 First distance
di2 Second distance
dp1 First detail level parameter
dp2 Second detail level parameter
M51 51st communication terminal
M52 52nd communication terminal
M53 53rd communication terminal
M54 54th communication terminal
M55 55th communication terminal
ma1 Disaster level mark
ma2 Safety unconfirmation mark
P1 First screen
P2 Second screen (user position information map display)
P3 Third screen (specific user position cross-sectional display)
P4 Fourth screen (specific user position planar display)
P5 Fifth screen (evacuation shelter list display)
P6 Sixth screen (specific evacuation shelter position cross-sectional display)
P7 Seventh screen (specific evacuation shelter position planar display)
P8 Eighth screen (movement locus cross-sectional display)
P9 Ninth screen (movement locus planar display)
Po1 First region
Po2 Second region
Po3 Third region
sp Safety type parameter
T1 First time (transmission interval of position information)
Thrd1 First distance threshold
Thrd2 Second distance threshold
Thrd3 Third distance threshold

## Claims

1. A communication terminal comprising a display unit, wherein
the display unit displays at least one of a first selection screen including one or more pieces of position information of communication terminals different from at least the communication terminal and a second selection screen including one or more pieces of position information of real estate,
when one piece of position information of the one or more of the different communication terminals is selected on the first selection screen, the display unit displays a first result screen including a topographical cross section between a first region in which the communication terminal is located and a second region in which the different communication terminal selected on the first selection screen are located, and
when one of the one or more pieces of position information of the real estate is selected on the second selection screen, the display unit displays a second result screen including a topographical cross section between the first region and a third region in which the real estate selected on the second selection screen is located.

2. The communication terminal according to claim 1, wherein the position information of the different communication terminal on the first selection screen includes height information of the different communication terminal and information regarding a movement direction of the different communication terminal.

3. The communication terminal according to claim 2, wherein the height information is obtained by converting first height information indicated using a length measurement unit into second height information indicating a degree of height without using the length measurement unit.

4. The communication terminal according to claim 1, wherein
the first result screen includes information regarding a height difference between the first region and the second region, height information of the first region, and height information of the second region,
the second result screen includes information regarding a height difference between the first region and the third region, height information of the first region, and height information of the third region,
the information regarding the height difference between the first region and the second region in the first result screen is represented by using a length measurement unit,
the information regarding the height difference between the first region and the third region in the second result screen is represented by using the length measurement unit,
the height information of the first region and the height information of the second region in the first result screen are indicated as a degree of height without using the length measurement unit, and
the height information of the first region and the height information of the third region in the second result screen are indicated as a degree of height without using the length measurement unit.

5. The communication terminal according to any one of claims 1 to 4, wherein
the display unit displays the first result screen when one piece of the position information of the one or more of the different communication terminals is selected on the first selection screen and a distance between the first region and the second region is less than a first distance threshold,
the display unit displays a third result screen having a map including the first region and the second region when one piece of the position information of the one or more of the different communication terminals is selected on the first selection screen and the distance between the first region and the second region is equal to or more than the first distance threshold,
the display unit displays the second result screen when one of the one or more pieces of position information of the real estate is selected on the second selection screen and a distance between the first region and the third region is less than a second distance threshold, and
the display unit displays a fourth result screen including a map including the first region and the third region when one of the one or more pieces of position information of the real estate is selected on the second selection screen and the distance between the first region and the third region is equal to or more than the second distance threshold.

6. The communication terminal according to claim 5, wherein the first distance threshold is larger than the second distance threshold.

7. The communication terminal according to claim 5, wherein the third result screen includes at least one of a movement locus of the communication terminal or a movement locus of the different communication terminal selected on the first selection screen.

8. The communication terminal according to claim 1, wherein in a case where a predetermined operation is performed on the first selection screen, the display unit displays a fifth result screen including a map including the first region and a region where each of the one or more of the different communication terminals is located.

9. A communication terminal comprising a display unit, wherein
the display unit displays a first selection screen including one or more pieces of position information of communication terminals different from at least the communication terminal, and
when the communication terminal or one piece of position information of the one or more of the different communication terminals is selected on the first selection screen, the display unit displays a sixth result screen including a movement locus in a vertical direction of one of a first region in which the communication terminal is located and a second region in which the different communication terminal selected on the first selection screen is located.

10. A communication terminal comprising a display unit, wherein
the display unit displays a first selection screen including one or more pieces of position information of communication terminals different from at least the communication terminal, and
when the communication terminal or one piece of position information of the one or more of the different communication terminals is selected on the first selection screen, the display unit displays one of a sixth result screen including a movement locus in a vertical direction of one of a first region in which the communication terminal is located and a second region in which the different communication terminal selected on the first selection screen is located and a seventh result screen including a movement locus in a horizontal direction of one of first region in which the communication terminal is located and the second regions in which the different communication terminal selected on the first selection screen is located, on a basis of a movement direction of the selected communication terminal among the communication terminals.
